# EUROPEAN PATENT APPLICATION

(11) **EP 1 830 472 A2**
(43) Date of publication of application: **05.09.2007**
(21) Application number: 07101125.8
(22) Date of filing: 24.01.2007
(51) Int. Cl.: H04B 1/16, H04N 5/44, H04H 1/00

(54) **Signal processing device, in particular for receiving television and/or radio signals**

(30) Priority: 01.03.2006 CN 200620007222 U
(71) Applicant: Yuan High-Tech Development Co. Ltd., 100 Tapei (TW)
(72) Inventor: Yang, Shih - Huai, Sinyi District, 110, Taipei City (TW)
(74) Representative: Beck, Michael Rudolf

(57) **Abstract**

The inventive signal processing device has two antennas to receive video/audio signals. The antennas tune the frequency bands of the signals they receive in order to display two video/audio signals of two different bands. Or, if the antennas are tuned to receive video/audio signals of the same frequency band, the sensitivity on receiving.

## Description

### Field of the invention

The present invention relates to a signal processing device which is particularly suited for receiving television and/or radio signals.

### Description of the Related Art

For watching television (TV) with a computer, a TV/PC (personal computer) switch box is connected between the computer and a TV signal line so that TV signals can be transferred to be displayed. Because of its large size the TV/PC switch box is used with a desktop computer, but not suitable for a portable notebook computer. Not to mention watching TV on the Internet through a wireless connection.

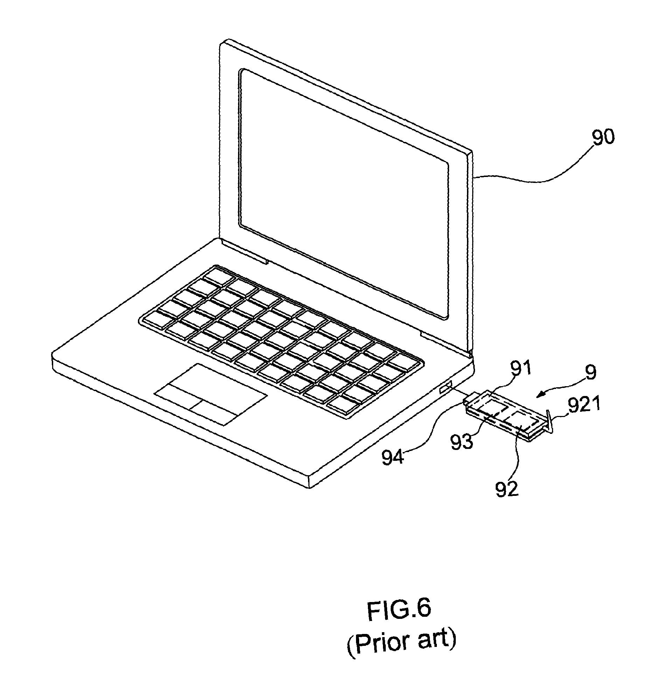

A conventional digital TV receiver 9, which is shown in FIG. 6, comprises a control circuit board 91 to control the operations of the digital TV receiver 9, a signal receiver 92 with an antenna 921 set in the digital TV receiver 9 to receive signals sent from a digital TV broadcasting system, a TV tuner 93 to decode/encode signals received, and a connector 94 to connect with a notebook computer 90 or a desktop computer.

However, with the conventional digital TV receiver 9 only one frequency band can be searched and the sensitivity for receiving signals of the requested frequency band is weak. In addition, only one video window is displayed with poor quality.

### Summary of the invention

The object of the invention is to provide a signal processing device for receiving television signals, which provides a broader scope of using facilities and allows improving the sensitivity.

This technical problem is solves by a signal processing device according to claim 1 and a signal processing device according to claim 8.

Further advantageous embodiments are laid down in the dependent claims.

The invention allows receiving signals of two frequency bands through tuning the frequency bands of the signals into two different bands to be received by two signal receivers, which allows to switch faster between two channels, and to enhance signal-receiving sensitivity through tuning the frequency bands of the signals into the same band.

To achieve the above purpose, the present invention provides a television signal processor having dual antennas, comprising a first and a second signal receivers, where the first and the second signal receivers receive video/audio signals of requested frequency bands and the signal receivers comprise a first and a second antennas, a first and a second tuners, a first and a second infrared-rays signal-receiving units and a first and a second video/audio decoders; a video/audio transmitter connected with the video/audio decoders to receive video/audio signals from the first and the second signal receivers; an encoder connected with the video/audio transmitters to receive video/audio signals to be compressed and encoded; and a connecting unit connected with the encoder to connect to an outside electrical device for displaying the video/audio signals. Accordingly, a novel television signal processor having dual antennas is obtained.

### Brief descriptions of the drawings

The present invention will be better understood from the following detailed descriptions of preferred embodiments according to the present invention, taken in conjunction with the accompanying drawings, in which
- FIG.1: is a perspective view showing the present invention;
- FIG.2: is a block view showing the first structure;
- FIG. 3: is a block view showing the second structure;
- FIG.4: is a view showing the state of use of the second structure; and
- FIG.5: is a block view showing the third structure;
- FIG.6: is a state-of-use view of a prior art.

### Description of preferred embodiments

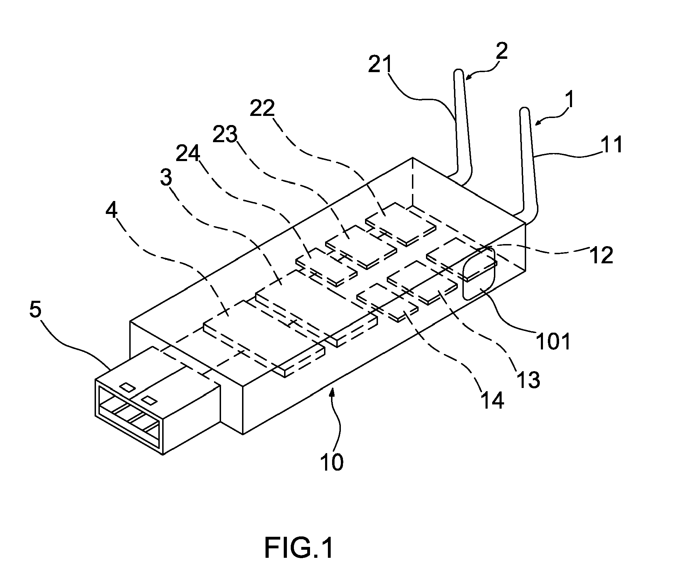

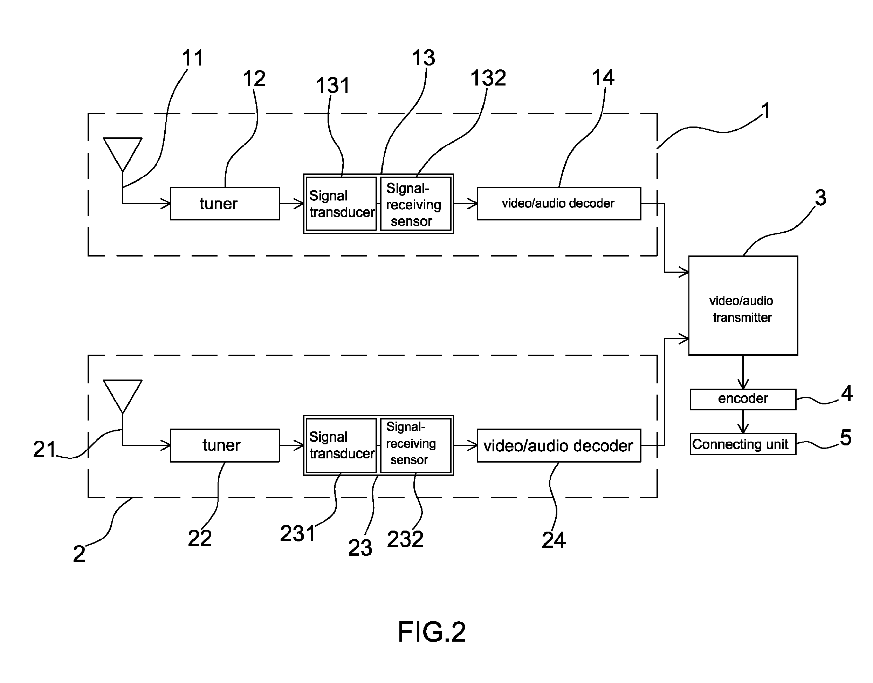

FIGS. 1 and 2 show an embodiment of a television signal processing device according to the present invention having dual antennas. The processor comprises a first signal receiver 1, a second signal receiver 2, a video/audio transmitter 3, an encoder 4 and a connecting unit 5, where the first signal receiver 1, the second signal receiver 2, the video/audio transmitter 3, the encoder 4 and the connecting unit 5 are set in a shell 10. By tuning frequency bands of the first signal receiver 1 and the second signal receiver 2, signals from two frequency bands are received and outputted simultaneously; or, by tuning the frequency bands of the signal receivers 1, 2 into the same band, signal-receiving sensitivity is enhanced.

The first signal receiver 1 receives required video/audio signals, comprising a first antenna 11; a first tuner 12 connected with the first antenna 11; a first infrared-rays signal-receiving unit 13 connected with the first tuner 12; and a first video/audio decoder 14 connected with the first infrared-rays signal-receiving unit 13, where the first infrared-rays signal-receiving unit 13 is corresponding to a window 101 at a side of the shell 10.

The second signal receiver 2 receives required video/audio signals, comprising a second antenna 21; a second tuner 22 connected with the second antenna 21; a second infrared-rays signal-receiving unit 23 connected with the second tuner 22; and a second video/audio decoder 24 connected with the second infrared-rays signal-receiving unit 23, where the second infrared-rays signal-receiving unit 23 is corresponding to the window 101 at the side of the shell 10.

The video/audio transmitter 3 is connected with the first and the second signal receivers 1, 2 to receive video/audio signals from the first and the second signal receivers 1, 2 to be transmitted.

The encoder 4 is connected with the video/audio transmitter 3 to receive video/audio signals transmitted from the video/audio transmitter 3 to be compressed and encoded.

The connecting unit 5 is connected with the encoder 4 to connect to an outside electrical device for displaying the video/audio signals with the outside electrical device. The connecting unit 4 is a connector to connect to the outside electrical device, which is a USB (Universal Serial Bus) connector, a Card Bus connector, an Express card connector, a PCMCIA (Personal Computer Memory Card International Association) connector, a Mini PCI (Protocol Control Information) connector, etc. Thus, a novel television signal processor having dual antennas is obtained.

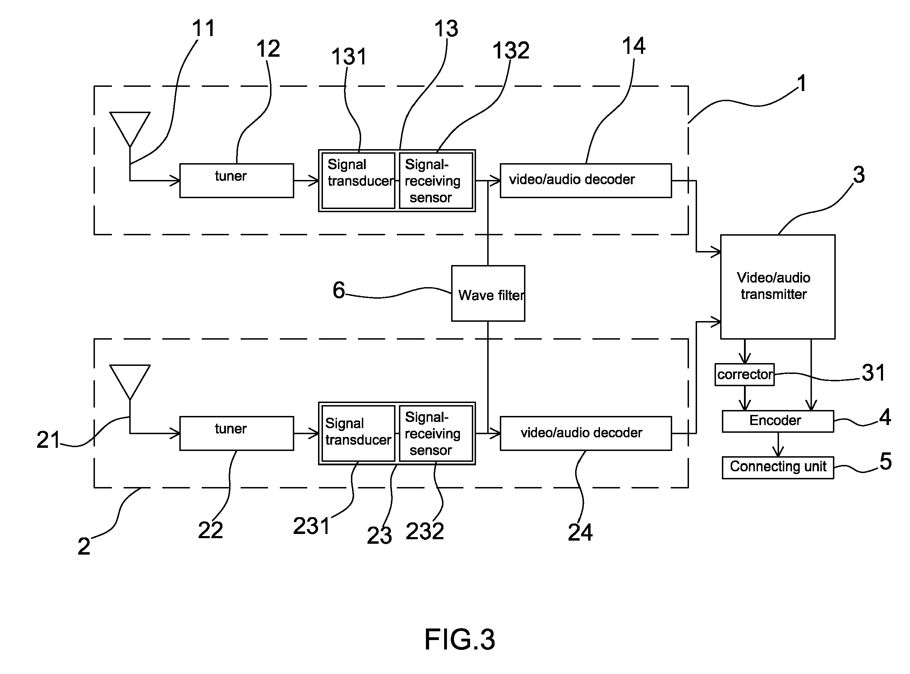

FIG. 3 is a block view showing the second structure. As shown in the figure, the first infrared-rays signal-receiving unit 13 comprises a first signal transducer 131, and a first signal-receiving sensor 132 connected with the first signal transducer 131. The second infrared-rays signal-receiving unit 23 comprises a second signal transducer 231, and a second signal-receiving sensor 232 connected with the second signal transducer 231. Coordinated with a remote controller, frequency bands of a first and a second signal receiver 1, 2 are set and controlled. A wave filter 6, which can be a 3-dimensional cone filter, is connected between the signal receivers 1, 2, where, through a 3-dimensional digital Y (luminance)/ C (chroma) separation technology done with a Y/C separation circuit, luminance signals (Y) and chroma (C) signals are precisely separated to eliminate noises from interferences between colors. A corrector 31 is set between a video/audio transmitter 3 and an encoder 4, where the corrector 31 can be a Gamma corrector to distinguish levels of brightness (as those in a cloud) more clearly by selecting a lower Gamma value on the bright screen and suffering some levels of darkness.

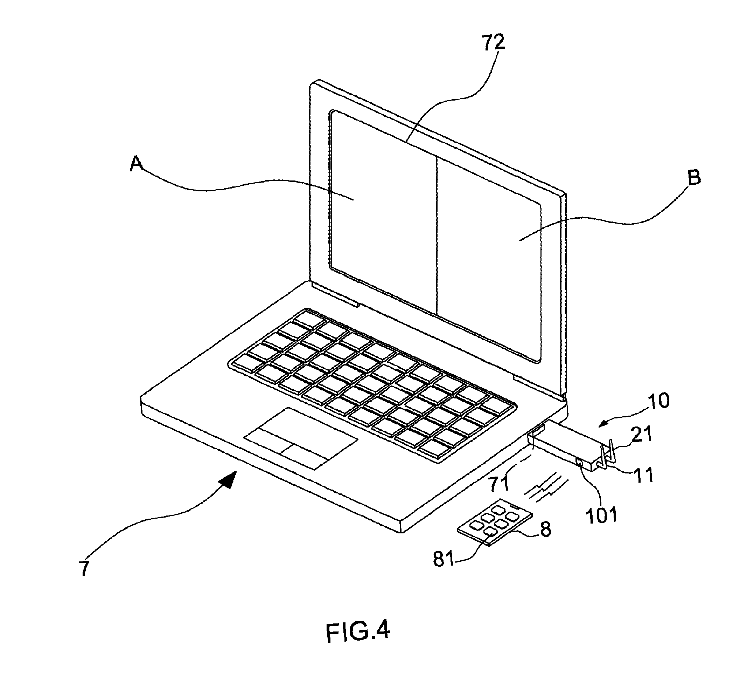

As shown in FIG. 4, when using the present invention, an outside electrical device is connected with a connecting unit 5. For example, the connecting unit 5 can be a USB interface and the outside electrical device can be a notebook computer 7. In an implementation, the connecting unit 5 is plugged in a USB connector 71 of the notebook computer 7 for connecting the present invention with the notebook computer 7. When using the present invention, a remote controller 8 is used with its buttons 81 to transfer required setup signals and control signals to a first and a second corresponding signal receivers 1, 2 coordinated with a first and a second infrared-rays signal-receiving unit 13, 23. When the first and the second signal receivers 1,2 are tuned to receive signals of different frequency bands, a first and a second corresponding antennas 11, 21 receive video/audio signals of different frequency bands to be transferred to a wave filter 6 and then is respectively transferred to a first and a second video/audio decoder 14,24. Or, the video/audio signals are directly transferred to the video/audio decoder 14, 24 from the first and the second tuner 12, 22. After the video/audio transmitter 3 receives the video/audio signals, the video/audio signals are transferred to an encoder 4 for required format editing (MPEG2 or MPEG4). Then the video/audio signals are transferred through the connecting unit 5 to the notebook computer 7 to be displayed with two video windows ALB (two lined windows or one big window with a smaller one) on the display 72 of the notebook computer 7, where video/audio signals of two frequency bands are displayed on two video windows ALB simultaneously.

On the other hand, when the frequency bands of signals received by the first and the second signal receivers 1, 2 are tuned to be the same, the first and the second antennas receive video/audio signals of the same frequency band to be transferred to the wave filter 6 through the first and the second tuners 12, 22. Then the signals are transferred from the wave filter 6 to the first and the second video/audio decoder 14, 24. Or, the signals are directly transferred to the video/audio decoder 14, 24 from the first and the second tuner 12, 22. After the video/audio transmitter 3 receives the signals of the same band, the signals are transferred to the encoder 4 for required format editing (MPEG2 or MPEG4). Then the signals are transferred through the connecting unit 5 to the notebook computer 7 to be displayed on the display 72 of the notebook computer 7 with a video window. Because the first and the second signal receivers receive signals of the same frequency band, signal-receiving sensitivity is enhanced.

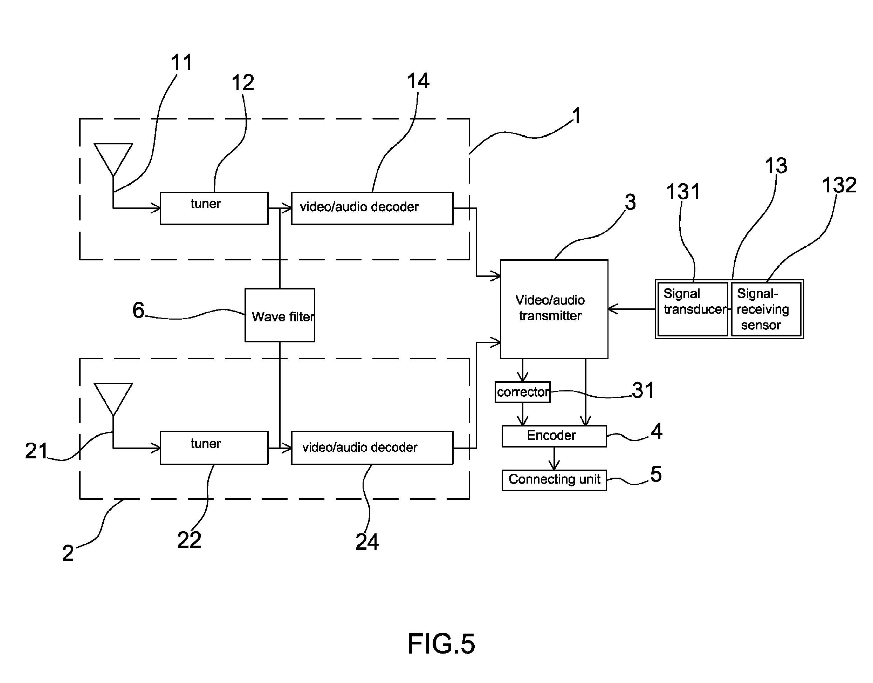

However, even though the first structure uses first and the second infrared-rays signal-receiving units 13,23, the present invention can use only a single infrared-rays signal-receiving unit 13 as shown in FIG. 5 to be connected with the video/audio transmitter 3 to receive video/audio signals of two different frequency bands, where the third infrared-rays signal-receiving unit 13 comprises a signal transducer 131, and one signal-receiving sensor 132 connected with the one signal transducer 131.

To sum up, the present invention is a television signal processor having dual antennas, where, through tuning the frequency bands of the signals into two different bands to be received by the first and the second signal receiver, signals of two frequency bands are displayed simultaneously; or, through tuning the frequency bands of the signals into the same band, signal-receiving sensitivity is enhanced.

The preferred embodiments herein disclosed are not intended to unnecessarily limit the scope of the invention. Therefore, simple modifications or variations belonging to the equivalent of the scope of the claims and the instructions disclosed herein for a patent are all within the scope of the present invention.

## Claims

1. Signal processing device, in particular for receiving television and/or radio signals, comprising:
(a) a first signal receiver (1), said first signal receiver receiving video/audio signals of a requested frequency band, said first signal receiver comprising:
(i) a first antenna (11);
(ii) a first tuner (12) being connected with said first antenna;
(iii) a first infrared-rays signal-receiving unit (13) being connected with said first tuner; and
(iv) a first video/audio decoder (14) being connected with said first infrared-rays signal-receiving unit;
(b) a second signal receiver (2), said second signal receiver receiving video/audio signals of a requested frequency band, said second signal receiver comprising:
(i) a second antenna (2);
(ii) a second tuner (22) being connected with said second antenna;
(iii) a second infrared-rays signal-receiving unit (23) being connected with said second tuner; and
(iv) a second video/audio decoder (24) being connected with said second infrared-rays signal-receiving unit;
(c) a video/audio transmitter (3), said video/audio transmitter being connected with said first video/audio decoder and said second video/audio decoder to receive video/audio signals from said first signal receiver and said second signal receiver;
(d) an encoder (4), said encoder being connected with said video/audio transmitter to receive video/audio signals from said video/audio transmitter to be compressed and encoded; and
(e) a connecting unit (5), said connecting unit being connected with said encoder, said connecting unit connecting to an outside electrical device to display said video/audio signals on said outside electrical device.

2. The device according to claim 1, wherein a wave filter (6) is connected between said first signal receiver and said second signal receiver.

3. The device according to claim 2, wherein said wave filter (6) is a 3-dimensional comb filter.

4. The device according to one of claims 1 to 3, wherein said first infrared-rays signal-receiving unit (13) comprises a first signal transducer (131), and a first signal-receiving sensor (132) connected with said first signal transducer; and wherein said second infrared-rays signal-receiving unit (23) comprises a second signal transducer (231), and a second signal-receiving sensor (232) connected with said second signal transducer.

5. The device according to one of claims 1 to 4, wherein a corrector (31) is set between said video/audio transmitter and said encoder.

6. The device according to claim 5, wherein said corrector (31) is a Gamma corrector.

7. The device according to one of claims 1 to 6, wherein said connecting unit, connecting to said outside electrical device, is selected from a group consisting of a serial bus connector, a card bus connector, an express card connector, a PCMCIA (Personal Computer Memory Card International Association) connector, and a Mini PCI (Protocol Control Information) connector.

8. Signal processing device, in particular for receiving television and/or radio signals, comprising:
(a) a first signal receiver (1), said first signal receiver receiving video/audio signals of requested frequency band, said first signal receiver comprising:
(i) a first antenna (11);
(ii) a first tuner (12) being connected with said first antenna; and
(iii) a first video/audio decoder (14) being connected with said first tuner;
(b) a second signal receiver (2), said second signal receiver receiving video/audio signals of requested frequency band, said second signal receiver comprising:
(i) a second antenna (21);
(ii) a second tuner (22) being connected with said second antenna; and
(iii) a second video/audio decoder (24) being connected with said second tuner;
(c) a video/audio transmitter (3), said video/audio transmitter being connected with said first video/audio decoder and said second video/audio decoder to receive video/audio signals from said first signal receiver and said second signal receiver;
(d) a single infrared-rays signal-receiving unit (13) being connected with said video/audio transmitter (3), said third infrared-rays signal-receiving unit comprising a signal transducer (131) and a signal-receiving sensor (132) connected with said third signal transducer;
(e) an encoder (4), said encoder being connected with said video/audio transmitter to receive video/audio signals from said video/audio transmitter to be compressed and encoded; and
(f) a connecting unit (5), said connecting unit being connected with said encoder, said connecting unit connecting to an outside electrical device to display said video/audio signals on said outside electrical device.

9. The device according to claim 8, wherein a wave filter (6) is connected between said first signal receiver and said second signal receiver.

10. The device according to of claim 8 or 9, wherein a corrector (31) is set between said video/audio transmitter and said encoder.
